# EUROPÄISCHE PATENTSCHRIFT

(11) **EP 3 656 199 B1**
(45) Veröffentlichungstag und Bekanntmachung des Hinweises auf die Patenterteilung: **15.09.2021**
(21) Anmeldenummer: 19401046.8
(22) Anmeldetag: 14.11.2019
(51) Int. Cl.: A01C 17/00

(54) **VERFAHREN ZUR VERIFIKATION VON MESSWERTEN**
METHOD FOR VERIFYING MEASURED VALUES
PROCÉDÉ DE VÉRIFICATION DE VALEURS MESURÉES

(30) Priorität: 26.11.2018 DE 102018129713
(43) Veröffentlichungstag der Anmeldung: 27.05.2020
(73) Patentinhaber: Amazonen-Werke H. Dreyer SE & Co. KG, 49205 Hasbergen (DE)
(72) Erfinder: Rahe, Florian, 49504 Lotte (DE); Ströbel-Fröschle, Markus, 49124 Georgsmarienhütte (DE)

(56) Entgegenhaltungen:
- EP-A1- 3 017 678

## Beschreibung

Die Erfindung betrifft ein Verfahren zur Verifikation von Messwerten einer landwirtschaftlichen Streumaschine gemäß des Patentanspruchs 1.

Aus der EP 3 017 678 A1 sind landwirtschaftliche Streumaschinen bekannt, welche während des Streuvorgangs aktuelle Parameter der landwirtschaftlichen Streumaschine erfassen und diese zur Steuerung oder Regelung der Streugutausbringung verwenden. Beispielsweise verfügen landwirtschaftliche Streumaschinen bereits über Einrichtungen, mittels welchen der Abwurfwinkel des von der landwirtschaftlichen Streumaschine abgeworfenen Streuguts überwachbar ist. Durch eine solche Überwachung können Abweichungen von einer geplanten Streugutausbringung festgestellt werden, sodass eine entsprechende Anpassung der Einstellparameter der landwirtschaftlichen Streumaschine zur Eliminierung dieser Abweichungen erfolgen kann.

Bei der Verwendung entsprechender Steuer- oder Regelsysteme besteht jedoch das Problem, dass der Benutzer den ordnungsgemäßen Betrieb des Systems bisher nicht überwachen kann. Es hat sich gezeigt, dass die von der Messeinrichtung der landwirtschaftlichen Streumaschine gelieferten Messwerte aufgrund unterschiedlicher Gegebenheiten temporär oder dauerhaft unpräzise oder nicht-plausibel sein können. Durch die Verwendung von fehlerhaften Messwerten in einem Steuer- oder Regelsystem einer landwirtschaftlichen Streumaschine kommt es zu ungeeigneten Anpassungen der Maschineneinstellungen, woraus letztendlich eine Fehlausbringung des Streuguts resultiert.

Messeinrichtungen von landwirtschaftlichen Streumaschinen können beispielsweise aufgrund von Verschmutzungen oder Beschädigungen unpräzise oder fehlerhafte Messwerte liefern. In diesen Fällen kommt es häufig zu einer Fehlausbringung des Streuguts, ohne das der Landwirt die Fehlausbringung bemerkt. Der Landwirt verlässt sich auf die Funktionalität des Steuer- oder Regelsystems der landwirtschaftlichen Streumaschine, ohne eine entsprechende Fehlfunktion feststellen zu können.

Die der Erfindung zugrundeliegende Aufgabe besteht somit darin, eine Verifikationsmöglichkeit für Messwerte einer landwirtschaftlichen Streumaschine zu schaffen.

Die Aufgabe wird gelöst durch ein Verfahren der eingangs genannten Art, wobei im Rahmen des erfindungsgemäßen Verfahrens ein den Parameter der landwirtschaftlichen Streumaschine repräsentierender Berechnungswert mittels einer Berechnungseinrichtung berechnet wird. Im Anschluss werden der den Parameter der landwirtschaftlichen Streumaschine repräsentierende Messwert und der den Parameter der landwirtschaftlichen Streumaschine repräsentierende Berechnungswert durch eine Auswerteeinrichtung verglichen.

Die Erfindung macht sich die Erkenntnis zunutze, dass Werte, welche mittels einer Messeinrichtung einer landwirtschaftlichen Streumaschine messtechnisch erfasst werden können, regelmäßig auch über die Anwendung geeigneter Rechenvorschriften berechnet werden können. In diesem Zusammenhang kann von einem überbestimmten System gesprochen werden, welches die Verifikation von Messwerten durch den Vergleich mit Berechnungswerten erlaubt. Ein Benutzer kann somit die Genauigkeit und/oder Plausibilität von Messwerten überwachen, welche von einer Messeinrichtung der landwirtschaftlichen Streumaschine aufgezeichnet werden. Auf diese Weise kann auch festgestellt werden, ob die von der Messeinrichtung erfassten Messwerte für die Anpassung des Streuverhaltens durch ein entsprechendes Steuer- oder Regelsystem der landwirtschaftlichen Streumaschine verwendet werden können.

Die Berechnungseinrichtung kann dabei Bestandteil der landwirtschaftlichen Streumaschine oder eines maschinenexternen Computersystems sein. Ferner kann die Auswerteeinrichtung Bestandteil der landwirtschaftlichen Streumaschine oder eines maschinenexternen Computersystems sein. Die Berechnungsvorschriften, welche der Berechnung des den Parameter der landwirtschaftlichen Streumaschine repräsentierenden Berechnungswertes zugrunde liegen, sind von den verwendeten Streuscheiben der landwirtschaftlichen Streumaschine und/oder der Konfiguration der landwirtschaftlichen Streumaschine abhängig.

In einer bevorzugten Ausführungsform des erfindungsgemäßen Verfahrens ist der Parameter der landwirtschaftlichen Streumaschine ein sich auf das Flugverhalten des Streuguts beziehender Streuparameter oder ein sich auf die Einstellung der landwirtschaftlichen Streumaschine beziehender Einstellparameter. Sich auf das Flugverhalten des Streuguts beziehende Streuparameter sind beispielsweise die Wurfweite, der Abwurfwinkel oder die Arbeitsbreite. Sich auf die Einstellung der landwirtschaftlichen Streumaschine beziehende Einstellparameter sind beispielsweise der Aufgabepunkt des Streuguts auf die Streuscheiben der landwirtschaftlichen Streumaschine oder die Drehzahl der Streuscheiben der landwirtschaftlichen Streumaschine. Die sich auf die Einstellung der landwirtschaftlichen Streumaschine beziehenden Einstellparameter können außerdem die Öffnungsgröße, die Öffnungsform und/oder die Öffnungsposition einer Streugut-Zuführöffnung der landwirtschaftlichen Streumaschine betreffen. Wenn zur Ausbringung des Streuguts eine Streuscheibe mit einer oder mehreren Wurfschaufeln eingesetzt wird, können die sich auf die Einstellung der landwirtschaftlichen Streumaschine beziehenden Einstellparameter die Schaufelposition, die Schaufelneigung, die Schaufelausrichtung und/oder die Schaufellänge der einen oder der mehreren Wurfschaufeln der Streuscheibe der landwirtschaftlichen Streumaschine betreffen. Wenn zur Ausbringung des Streuguts das Streugut über eine Zuführrutsche der landwirtschaftlichen Streumaschine geleitet wird, können die sich auf die Einstellung der landwirtschaftlichen Streumaschine beziehenden Einstellparameter die Rutschenneigung, die Rutschenausrichtung und/der die Rutschenposition betreffen.

Die Wurfweite des Streuguts kann beispielsweise mittels einer Wurfweitenmesseinrichtung der landwirtschaftlichen Streumaschine sensorisch erfasst werden. Der Abwurfwinkel des Streuguts kann beispielsweise mit einer Abwurfwinkelmesseinrichtung der landwirtschaftlichen Streumaschine sensorisch erfasst werden. Der eingestellte Aufgabepunkt und die eingestellte Scheibendrehzahl können aus der Maschinensteuerung ausgelesen werden.

In einer weiteren bevorzugten Ausführungsform des erfindungsgemäßen Verfahrens werden bei der Berechnung des den Parameter der landwirtschaftlichen Streumaschine repräsentierenden Berechnungswertes die Streuscheibe, deren Geometrie und/oder deren Wurfschaufeltyp, die Streuscheibenkonfiguration und/oder Einstellparameter der landwirtschaftlichen Streumaschine berücksichtigt. Die bei der Streugutausbringung verwendeten Streuscheiben sowie deren Konfiguration haben einen erheblichen Einfluss auf die Querverteilung des ausgeworfenen Streuguts. Die Querverteilung wird außerdem durch Einstellparameter der landwirtschaftlichen Streumaschine, wie etwa dem Aufgabepunkt des Streuguts auf die Streuscheiben oder die Scheibendrehzahl, erheblich beeinflusst. Somit sind diese Informationen bei der Verifikation von Messwerten, welche sich auf das Flugverhalten des Streuguts beziehen, zu berücksichtigen.

In einer Weiterbildung des erfindungsgemäßen Verfahrens erfolgt das Berechnen des den Parameter der landwirtschaftlichen Streumaschine repräsentierenden Berechnungswertes auf Grundlage von physikalischen Zusammenhängen. Die physikalischen Zusammenhänge sind vorzugsweise in einem Speicher der Berechnungseinrichtung hinterlegt. Die Berechnung des den Parameter der landwirtschaftlichen Streumaschine repräsentierenden Berechnungswertes kann dabei ausschließlich oder unter anderem auf Grundlage von physikalischen Zusammenhängen erfolgen. In der Regel wird es notwendig sein, bei der Berechnung neben physikalischen Zusammenhängen weitere, beispielsweise empirisch ermittelte, Zusammenhänge zu berücksichtigen.

In einer anderen Ausführungsform des erfindungsgemäßen Verfahrens erfolgt das Berechnen des den Parameter der landwirtschaftlichen Streumaschine repräsentierenden Berechnungswertes auf Grundlage eines Zusammenhangs zwischen Wurfweite, Arbeitsbreite und Abwurfwinkel. Beispielsweise kann aus der Wurfweite und der Arbeitsbreite der Abwurfwinkel berechnet werden. Alternativ kann aus der Arbeitsbreite und dem Abwurfwinkel die Wurfweite berechnet werden. Alternativ kann aus der Wurfweite und dem Abwurfwinkel die Arbeitsbreite berechnet werden.

Darüber hinaus ist ein erfindungsgemäßes Verfahren vorteilhaft, bei welchem das Berechnen des den Parameter der landwirtschaftlichen Streumaschine repräsentierenden Berechnungswertes auf Grundlage von empirisch ermittelten Zusammenhängen erfolgt. Die empirisch ermittelten Zusammenhänge können sich beispielsweise auf den Einfluss der Streuscheibe und/oder der Streuscheibenkonfiguration auf das Flugverhalten des Streuguts beziehen. Vorzugsweise erfolgt das Berechnen des den Parameter der landwirtschaftlichen Streumaschine repräsentierenden Berechnungswertes sowohl auf Grundlage von physikalischen Zusammenhängen als auch auf Grundlage von empirisch ermittelten Zusammenhängen.

In einer weiteren Ausführungsform des erfindungsgemäßen Verfahrens erfolgt das Berechnen des den Parameter der landwirtschaftlichen Streumaschine repräsentierenden Berechnungswertes auf Grundlage eines Zusammenhangs zwischen Wurfweite, Scheibendrehzahl und Streuscheibe. Das Berechnen des den Parameter der landwirtschaftlichen Streumaschine repräsentierenden Berechnungswertes erfolgt beispielsweise auf Grundlage eines Zusammenhangs, welcher den Einfluss der Streuscheibe auf die Wurfweite und die Scheibendrehzahl betrifft. Alternativ oder zusätzlich erfolgt das Berechnen des den Parameter der landwirtschaftlichen Streumaschine repräsentierenden Berechnungswertes beispielsweise auf Grundlage eines Zusammenhangs, welcher den Einfluss der Scheibendrehzahl auf die Wurfweite und die zu verwendende Streuscheibe betrifft. Darüber hinaus kann das Berechnen des den Parameter der landwirtschaftlichen Streumaschine repräsentierenden Berechnungswertes auf Grundlage eines Zusammenhangs erfolgen, welcher den Einfluss der Wurfweite auf die Scheibendrehzahl und die zu verwendende Streuscheibe betrifft.

In einer anderen Ausführungsform des erfindungsgemäßen Verfahrens erfolgt das Berechnen des den Parameter der landwirtschaftlichen Streumaschine repräsentierenden Berechnungswertes auf Grundlage eines Zusammenhangs zwischen Abwurfwinkel, Scheibendrehzahl und Streuscheibe. Das Berechnen des den Parameter der landwirtschaftlichen Streumaschine repräsentierenden Berechnungswertes erfolgt dabei beispielsweise auf Grundlage eines Zusammenhangs, welcher den Einfluss der Streuscheibe auf den Abwurfwinkel und die Scheibendrehzahl betrifft. Alternativ oder zusätzlich kann das Berechnen des den Parameter der landwirtschaftlichen Streumaschine repräsentierenden Berechnungswertes auch auf Grundlage eines Zusammenhangs erfolgen, welcher den Einfluss der Scheibendrehzahl auf den Abwurfwinkel und die zu verwendende Streuscheibe betrifft. Das Berechnen des den Parameter der landwirtschaftlichen Streumaschine repräsentierenden Berechnungswertes kann auch auf Grundlage eines Zusammenhangs erfolgen, welcher den Einfluss des Abwurfwinkels auf die Scheibendrehzahl und die zu verwendende Streuscheibe betrifft.

Ferner ist ein erfindungsgemäßes Verfahren bevorzugt, bei welchem das Berechnen des den Parameter der landwirtschaftlichen Streumaschine repräsentierenden Berechnungswertes auf Grundlage eines Zusammenhangs zwischen Wurfweite, Arbeitsbreite und Streuscheibe erfolgt. Beispielsweise kann auf Grundlage der Wurfweite und der Arbeitsbreite die verwendete Streuscheibe ermittelt werden. Alternativ kann auf Grundlage der Arbeitsbreite und der verwendeten Streuscheibe die einzustellende Wurfweite ermittelt werden. Alternativ kann auf Grundlage der Wurfweite und der verwendeten Streuscheibe die Arbeitsbreite ermittelt werden.

Ferner ist ein erfindungsgemäßes Verfahren vorteilhaft, bei welchem beim Berechnen des den Parameter der landwirtschaftlichen Streumaschine repräsentierenden Berechnungswertes ein oder mehrere mittels einer Messeinrichtung der landwirtschaftlichen Streumaschine erfasste weitere Messwerte berücksichtigt werden. Beispielsweise kann zum Berechnen des die Wurfweite repräsentierenden Berechnungswertes ein messtechnisch erfasster Abwurfwinkel berücksichtigt werden. Alternativ kann zum Berechnen eines den Abwurfwinkel repräsentierenden Berechnungswertes eine messtechnisch erfasste Wurfweite berücksichtigt werden.

Außerdem ist ein erfindungsgemäßes Verfahren vorteilhaft, bei welchem beim Berechnen des den Parameter der landwirtschaftlichen Streumaschine repräsentierenden Berechnungswertes ein oder mehrere mittels einer maschinenexternen Messeinrichtung erfasste Messwerte berücksichtigt werden. Die mittels der maschinenexternen Messeinrichtung erfassten Messwerte können Eigenschaften des Streuguts, beispielsweise Körnereigenschaften des Streuguts, betreffen. Die durch die maschinenexterne Messeinrichtung erfassten Messwerte können der Berechnungseinrichtung beispielsweise durch manuelle Eingabe oder durch eine Datenübertragung zwischen der maschinenexternen Messeinrichtung und der Berechnungseinrichtung mitgeteilt werden. Die maschinenexterne Messeinrichtung kann beispielsweise auch ein mobiles Endgerät sein, welche auf Grundlage von erzeugtem Bildmaterial des Streuguts Streuguteigenschaften ableitet. Die ermittelten Eigenschaften können dann beispielsweise per Funk von dem mobilen Endgerät an die Berechnungseinrichtung übertragen werden.

In einer anderen Ausführungsform des erfindungsgemäßen Verfahrens betrifft der eine oder betreffen die mehreren mittels der maschinenexternen Messeinrichtung erfassten weiteren Messwerte den Korndurchmesser, das Korngrößenspektrum und/oder die Schüttdichte des Streuguts. Der Korndurchmesser und/oder das Korngrößenspektrum können beispielsweise mittels Bildauswertung ermittelt werden. Die Schüttdichte des Streuguts kann beispielsweise mittels einer Gewichtserfassungseinrichtung, wie etwa einer Waage, und einer Volumenerfassungseinrichtung, wie beispielsweise einem Messbecher, ermittelt werden.

Außerdem ist ein erfindungsgemäßes Verfahren vorteilhaft, bei welchem das Erfassen des den Parameter der landwirtschaftlichen Streumaschine repräsentierenden Messwertes mittels einer Messeinrichtung der landwirtschaftlichen Streumaschine durch Erfassen eines die Wurfweite der landwirtschaftlichen Streumaschine repräsentierenden Wurfweitenmesswertes mittels einer Wurfweitenmesseinrichtung der landwirtschaftlichen Streumaschine durchgeführt wird. In diesem Fall ist der Parameter also die Wurfweite, der Messwert ist der Wurfweitenmesswert und die Messeinrichtung ist die Wurfweitenmesseinrichtung. Alternativ wird das Erfassen des den Parameter der landwirtschaftlichen Streumaschine repräsentierenden Messwertes mittels einer Messeinrichtung der landwirtschaftlichen Streumaschine durch das Erfassen eines den Abwurfwinkel der landwirtschaftlichen Streumaschine repräsentierenden Abwurfwinkelmesswertes mittels einer Abwurfwinkelmesseinrichtung der landwirtschaftlichen Streumaschine durchgeführt. In diesem Fall ist der Parameter also der Abwurfwinkel, der Messwert ist der Abwurfwinkelmesswert und die Messweinrichtung ist die Abwurfwinkelmesseinrichtung.

In einer anderen bevorzugten Ausführungsform des erfindungsgemäßen Verfahrens werden beim Berechnen des den Parameter der landwirtschaftlichen Streumaschine repräsentierenden Berechnungswertes eine oder mehrere von einer Datenbank abgerufene Datenbankwerte berücksichtigt. Die Datenbank kann eine Streugutsortendatenbank sein, welche beispielsweise von dem Hersteller der landwirtschaftlichen Streumaschine betrieben wird. Vorzugsweise werden die von der Datenbank abgerufenen Datenbankwerte bei der Berechnung des den Parameter der landwirtschaftlichen Streumaschine repräsentierenden Berechnungswertes im Rahmen eines physikalischen Zusammenhangs und/oder eines empirisch ermittelten Zusammenhangs verwendet. Die Datenbankwerte können Flugeigenschaften des Streuguts betreffen. Ferner können die Datenbankwerte Körnereigenschaften des Streuguts betreffen.

Außerdem ist ein erfindungsgemäßes Verfahren vorteilhaft, bei welchem das Berechnen des den Parameter der landwirtschaftlichen Streumaschine repräsentierenden Berechnungswertes auf Grundlage eines Zusammenhangs zwischen Korngrößenspektrum, Schüttdichte, Abwurfwinkel, Einstellparametern und verwendeter Streuscheibe erfolgt.

Gemäß des erfindungsgemäßen Verfahrens wird eine Warnmeldung an einen Benutzer der landwirtschaftlichen Streumaschine ausgegeben, wenn die Abweichung zwischen dem den Parameter der landwirtschaftlichen Streumaschine repräsentierenden Messwert und dem den Parameter der landwirtschaftlichen Streumaschine repräsentierenden Berechnungswert eine Toleranzschwelle überschreitet. Nicht-erfindungsgemäß wird ein oder werden mehrere Einstellparameter der landwirtschaftlichen Streumaschine selbsttätig angepasst, wenn die Abweichung zwischen dem den Parameter der landwirtschaftlichen Streumaschine repräsentierenden Messwert und dem den Parameter der landwirtschaftlichen Streumaschine repräsentierenden Berechnungswert eine Toleranzschwelle überschreitet. Alternativ oder zusätzlich wird der Streuvorgang durch die landwirtschaftliche Streumaschine unterbrochen, wenn die Abweichung zwischen dem den Parameter der landwirtschaftlichen Streumaschine repräsentierenden Messwert und dem den Parameter der landwirtschaftlichen Streumaschine repräsentierenden Berechnungswert eine Toleranzschwelle überschreitet.

In den vorstehend beschriebenen Ausführungen ist das Verfahren zur Verifikation von Messwerten in Bezug auf landwirtschaftliche Streumaschinen beschrieben. Ferner ist es möglich, dass das Verfahren zur Verifikation von Messwerten anderer landwirtschaftlicher Maschinen zum Einsatz kommt, beispielsweise zur Verifikation von Messwerten einer landwirtschaftlichen Spritzeinrichtung, wie etwa einer Feldspritze. In diesem Zusammenhang wird zunächst ein einen Parameter der landwirtschaftlichen Spritzeinrichtung repräsentierender Messwert mittels einer Messeinrichtung der landwirtschaftlichen Spritzeinrichtung erfasst und ein den Parameter der landwirtschaftlichen Spritzeinrichtung repräsentierender Berechnungswert mittels einer Berechnungseinrichtung berechnet. Anschließend werden der den Parameter der landwirtschaftlichen Spritzeinrichtung repräsentierende Messwert und der den Parameter der landwirtschaftlichen Spritzeinrichtung repräsentierende Berechnungswert durch eine Auswerteeinrichtung verglichen. Beispielsweise kann auf diese Weise ein Füllstandsmesswert, welcher den Füllstand eines Vorratsbehälters der landwirtschaftlichen Spritzeinrichtung betrifft, verifiziert werden. Hierzu können beispielsweise Daten verwendet werden, welche von einem oder mehreren Durchflusssensoren geliefert werden.

Darüber hinaus ist das erfindungsgemäße Verfahren auch zur Verifikation von Messwerten anderer landwirtschaftlicher Maschinen, wie beispielsweise Sämaschinen, einsetzbar.

Nachfolgend werden bevorzugte Ausführungsformen der Erfindung unter Bezugnahme auf die beiliegenden Zeichnungen näher erläutert und beschrieben. Dabei zeigen:
- Fig. 1: eine landwirtschaftliche Streumaschine während des Ausführens des erfindungsgemäßen Verfahrens; und
- Fig. 2: ein Ausführungsbeispiel des erfindungsgemäßen Verfahrens in einer schematischen Darstellung.

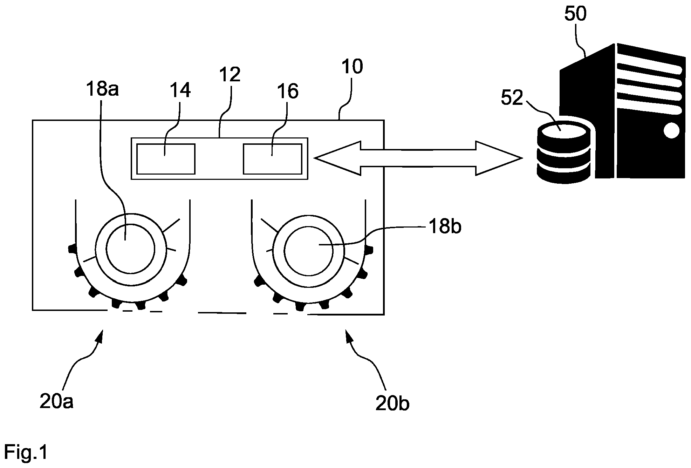

Die Fig. 1 zeigt eine als Zweischeiben Düngerstreuer ausgebildete landwirtschaftliche Streumaschine 10. Die landwirtschaftliche Streumaschine 10 weist eine Steuerungseinrichtung 12 auf, mittels welcher die Streugutausbringung während des Ausbringvorgangs selbsttätig angepasst werden kann. Beispielsweise kann mittels der Steuerungseinrichtung 12 der Aufgabepunkt des auf die Streuscheiben 18a, 18b aufgegebenen Streuguts und/oder die Streuscheibendrehzahl während des Streuvorgangs angepasst werden. Die Steuerungseinrichtung 12 veranlasst eine entsprechende Anpassung, wenn festgestellt wird, dass die tatsächliche Streugutausbringung von der beabsichtigen Streugutausbringung abweicht. Zur Feststellung entsprechender Abweichungen weist die Streumaschine 10 eine Abwurfwinkelmesseinrichtung 20a, 20b auf. Die Abwurfwinkelmesseinrichtung umfasst eine erste Gruppe 20a von Sensoren, welche um die Streuscheibe 18a herum angeordnet sind, und eine zweite Gruppe 20b von Sensoren, welche um die Streuscheibe 18b herum angeordnet sind. Die Sensoren der Abwurfwinkelmesseinrichtung 20a, 20b sind als Radarsensoren ausgebildet.

Während des Streuvorgangs kann es zu einer Verschmutzung oder einer Beschädigung der Sensoren der Messeinrichtung 20a, 20b kommen, sodass die von der Messeinrichtung 20a, 20b erzeugten Messwerte ungenau oder fehlerhaft sind. Um zu vermeiden, dass die Steuerungseinrichtung 12 die ungenauen oder fehlerhaften Messwerte der Messeinrichtung 20a, 20b bei der Steuerung und/oder Regelung des Streugutauswurfs verwendet, führt die landwirtschaftliche Streumaschine 10 während des Ausbringvorgangs ein Verfahren zur Verifikation der Messwerte aus.

Im Rahmen des Verfahrens wird während der Streugutausbringung ein den Abwurfwinkel der landwirtschaftlichen Streumaschine 10 repräsentierender Abwurfwinkelmesswert mittels der Abwurfwinkelmesseinrichtung 20a, 20b der landwirtschaftlichen Streumaschine 10 erfasst. Gleichzeitig wird ein den Abwurfwinkel der landwirtschaftlichen Streumaschine 10 repräsentierender Abwurfwinkelberechnungswert mittels einer Berechnungseinrichtung 14 der landwirtschaftlichen Streumaschine 10 berechnet. Die Berechnungseinrichtung 14 ist Bestandteil der Steuerungseinrichtung 12.

Auf Grundlage des Abwurfwinkelberechnungswertes kann nun eine Verifikation des Abwurfwinkelmesswertes erfolgen. Hierzu wird der Abwurfwinkelmesswert mit dem Abwurfwinkelberechnungswert durch eine Auswerteeinrichtung 16 verglichen. Die Auswerteeinrichtung 16 ist ebenfalls Bestandteil der Steuerungseinrichtung 12 der landwirtschaftlichen Streumaschine 10.

Das Berechnen des Abwurfwinkelberechnungswertes kann dabei auf Grundlage von physikalischen Zusammenhängen und/oder auf Grundlage von empirisch ermittelten Zusammenhängen erfolgen, wobei die der Berechnung zugrundliegenden Zusammenhänge auf einem Speicher der Berechnungseinrichtung 14 hinterlegt sind. Bei der Berechnung des Abwurfwinkelberechnungswertes können beispielsweise der Typ der verwendeten Streuscheiben 18a, 18b, die Konfiguration der verwendeten Streuscheiben 18a, 18b und/oder die an der Streumaschine 10 eingestellten Einstellparameter berücksichtigt werden. Die eingestellten Einstellparameter sind beispielsweise der eingestellte Aufgabepunkt und die eingestellte Scheibendrehzahl. Beispielsweise erfolgt das Berechnen des Abwurfwinkelberechnungswertes auf Grundlage eines Zusammenhangs zwischen der Wurfweite, der Arbeitsbreite und dem Abwurfwinkel. Die Wurfweite kann beispielsweise mittels einer Wurfweitenmesseinrichtung der landwirtschaftlichen Streumaschine 10 erfasst werden. Die eingestellte Arbeitsbreite kann beispielsweise aus der Maschinensteuerung ausgelesen werden.

Bei der Berechnung des Abwurfwinkelberechnungswertes können auch Messwerte berücksichtigt werden, welche mittels einer maschinenexternen Messeinrichtung erfasst wurden, beispielsweise der Korndurchmesser, das Korngrößenspektrum und/oder die Schüttdichte des Streuguts.

Die Steuerungseinrichtung 12 ist außerdem über eine Funkverbindung signalleitend mit einem maschinenexternen Computersystem 50 verbunden, wobei das maschinenexterne Computersystem 50 über eine Datenbank 52 verfügt. Die Datenbank 52 ist eine Streugutsortendatenbank, von welcher Streugutinformationen abgerufen werden können. Die Streugutinformationen können beispielsweise Körnereigenschaften oder das Flugverhalten einzelner Streugutsorten betreffen. Durch den Zugriff auf die Datenbank 52 können beim Berechnen des Abwurfwinkelberechnungswertes auch Datenbankwerte berücksichtigt werden, welche von der Datenbank 52 abgerufen werden.

Auf Grundlage des Vergleichs des Abwurfwinkelmesswertes mit dem Abwurfwinkelberechnungswert kann erfasst werden, ob die Messeinrichtung 20a, 20b ordnungsgemäß arbeitet und verwertbare Messwerte liefert. Wenn die Abweichung zwischen dem Abwurfwinkelmesswert und dem Abwurfwinkelberechnungswert eine Toleranzschwelle überschreitet, kann davon ausgegangen werden, dass die Messeinrichtung 20a, 20b, beispielsweise aufgrund von Verschmutzungen oder Beschädigungen, nicht ordnungsgemäß funktioniert. Die Verwendung der Messwerte der Messeinrichtung 20a, 20b zum selbsttätigen Anpassen der Streugutausbringung während des Ausbringvorgangs würde somit zu einer fehlerhaften Streugutausbringung führen, sodass die Verwendung der messtechnisch erfassten Abwurfwinkelwerte zur Steuerung und/oder Regelung des Streugutauswurfs zu vermeiden ist.

Wenn entsprechende Abweichungen des Abwurfwinkelmesswertes und des Abwurfwinkelberechnungswertes festgestellt werden, kann beispielsweise eine Warnmeldung an den Benutzer der landwirtschaftlichen Streumaschine 10 ausgegeben werden, um diesen darüber zu informieren, dass die Messeinrichtung 20a, 20b nicht ordnungsgemäß arbeitet.

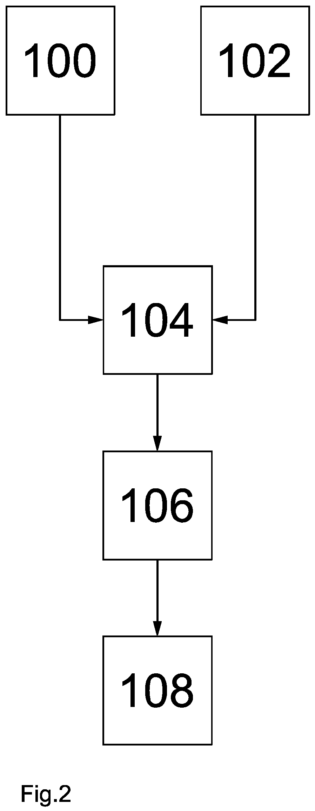

Die Fig. 2 zeigt schematisch den Ablauf des Verfahrens zur Verifikation von Messwerten einer landwirtschaftlichen Streumaschine 10. Im Schritt 100 wird ein einen Parameter einer landwirtschaftlichen Streumaschine 10 repräsentierender Messwert mittels einer Messeinrichtung 20a, 20b der landwirtschaftlichen Streumaschine 10 erfasst. Gleichzeitig wird ein den gleichen Parameter der landwirtschaftlichen Streumaschine 10 repräsentierenden Berechnungswert mittels einer Berechnungseinrichtung 14 im Schritt 102 berechnet.

Der erfasste Messwert und der berechnete Berechnungswert werden dann einer Auswerteeinrichtung 16 bereitgestellt, welche im Schritt 104 den Messwert und den Berechnungswert miteinander vergleicht.

Im Schritt 106 wird festgestellt, inwieweit der Messwert von dem Berechnungswert abweicht, damit geeignete Maßnahmen eingeleitet werden können, falls die Abweichung zwischen dem Messwert und dem Berechnungswert eine Toleranzschwelle überschreitet.

Im Schritt 108 wird eine Warnmeldung an den Benutzer der landwirtschaftlichen Streumaschine 10 ausgegeben und der Streuvorgang durch die landwirtschaftliche Streumaschine 10 unterbrochen. Somit wird eine fehlerhafte Steuerung oder Regelung der Streugutausbringung verhindert, welche von dem überprüften Messwert abhängig ist.

### Bezugszeichen

- 10: Streumaschine
- 12: Steuerungseinrichtung
- 14: Berechnungseinrichtung
- 16: Auswerteeinrichtung
- 18a, 18b: Streuscheiben
- 20a, 20b: Messeinrichtung
- 50: maschinenexternes Computersystem
- 52: Datenbank
- 100-108: Verfahrensschritte

## Patentansprüche

1. Verfahren zur Verifikation von Messwerten einer landwirtschaftlichen Streumaschine (10), mit den Schritten:
- Erfassen eines einen Parameter einer landwirtschaftlichen Streumaschine (10) repräsentierenden Messwertes mittels einer Messeinrichtung (20a, 20b) der landwirtschaftlichen Streumaschine (10),
- Berechnen eines den Parameter der landwirtschaftlichen Streumaschine (10) repräsentierenden Berechnungswertes mittels einer Berechnungseinrichtung (14), wobei bei der Berechnung des den Parameter der landwirtschaftlichen Streumaschine (10) repräsentierenden Berechnungswertes eine Streuscheibe (18a, 18b), eine Streuscheibenkonfiguration und/oder Einstellparameter der landwirtschaftlichen Streumaschine (10) berücksichtigt werden; und
- Vergleichen des den Parameter der landwirtschaftlichen Streumaschine (10) repräsentierenden Messwertes und des den Parameter der landwirtschaftlichen Streumaschine (10) repräsentierenden Berechnungswertes durch eine Auswerteeinrichtung (16), wobei zumindest einer der folgenden Schritte ausgeführt wird, wenn die Abweichung zwischen dem den Parameter der landwirtschaftlichen Streumaschine (10) repräsentierenden Messwert und dem den Parameter der landwirtschaftlichen Streumaschine (10) repräsentierenden Berechnungswert eine Toleranzschwelle überschreitet:
- Ausgeben einer Warnmeldung an einen Benutzer der landwirtschaftlichen Streumaschine (10),
- Unterbrechen des Streuvorgangs durch die landwirtschaftliche Streumaschine (10).

2. Verfahren nach Anspruch 1,
**dadurch gekennzeichnet, dass** der Parameter der landwirtschaftlichen Streumaschine (10) ein sich auf das Flugverhalten des Streuguts beziehender Streuparameter oder ein sich auf die Einstellung der landwirtschaftlichen Streumaschine (10) beziehender Einstellparameter ist.

3. Verfahren nach einem der vorstehenden Ansprüche,
**dadurch gekennzeichnet, dass** das Berechnen des den Parameter der landwirtschaftlichen Streumaschine (10) repräsentierenden Berechnungswertes auf Grundlage von physikalischen Zusammenhängen erfolgt.

4. Verfahren nach einem der vorstehenden Ansprüche,
**dadurch gekennzeichnet, dass** das Berechnen des den Parameter der landwirtschaftlichen Streumaschine (10) repräsentierenden Berechnungswertes auf Grundlage eines Zusammenhangs zwischen Wurfweite, Arbeitsbreite und Abwurfwinkel erfolgt.

5. Verfahren nach einem der vorstehenden Ansprüche,
**dadurch gekennzeichnet, dass** das Berechnen des den Parameter der landwirtschaftlichen Streumaschine (10) repräsentierenden Berechnungswertes auf Grundlage von empirisch ermittelten Zusammenhängen erfolgt.

6. Verfahren nach einem der vorstehenden Ansprüche,
**dadurch gekennzeichnet, dass** beim Berechnen des den Parameter der landwirtschaftlichen Streumaschine (10) repräsentierenden Berechnungswertes ein oder mehrere mittels einer Messeinrichtung (20a, 20b) der landwirtschaftlichen Streumaschine (10) erfasste weitere Messwerte berücksichtigt werden.

7. Verfahren nach einem der vorstehenden Ansprüche,
**dadurch gekennzeichnet, dass** beim Berechnen des den Parameter der landwirtschaftlichen Streumaschine (10) repräsentierenden Berechnungswertes ein oder mehrere mittels einer maschinenexternen Messeinrichtung erfasste Messwerte berücksichtigt werden.

8. Verfahren nach Anspruch 7,
**dadurch gekennzeichnet, dass** der eine oder die mehreren mittels der maschinenexternen Messeinrichtung erfassten weiteren Messwerte den Korndurchmesser, das Korngrößenspektrum und/oder die Schüttdichte des Streuguts betreffen.

9. Verfahren nach einem der vorstehenden Ansprüche,
**dadurch gekennzeichnet, dass** das Erfassen des den Parameter der landwirtschaftlichen Streumaschine (10) repräsentierenden Messwertes mittels einer Messeinrichtung (20a, 20b) der landwirtschaftlichen Streumaschine (10) durch einen der folgenden Schritte durchgeführt wird:
- Erfassen eines die Wurfweite der landwirtschaftlichen Streumaschine (10) repräsentierenden Wurfweitenmesswertes mittels einer Wurfweitenmesseinrichtung der landwirtschaftlichen Streumaschine (10);
- Erfassen eines den Abwurfwinkel der landwirtschaftlichen Streumaschine (10) repräsentierenden Abwurfwinkelmesswertes mittels einer Abwurfwinkelmesseinrichtung der landwirtschaftlichen Streumaschine (10).

10. Verfahren nach einem der vorstehenden Ansprüche,
**dadurch gekennzeichnet, dass** beim Berechnen des den Parameter der landwirtschaftlichen Streumaschine (10) repräsentierenden Berechnungswertes ein oder mehrere von einer Datenbank (52) abgerufene Datenbankwerte berücksichtigt werden.

11. Verfahren nach einem der vorstehenden Ansprüche,
**dadurch gekennzeichnet, dass** das Berechnen des den Parameter der landwirtschaftlichen Streumaschine (10) repräsentierenden Berechnungswertes auf Grundlage eines Zusammenhangs zwischen Korngrößenspektrum, Schüttdiche, Abwurfwinkel, Einstellparametern und verwendeter Streuscheibe (18a, 18b) erfolgt.

## Claims

1. Method for verifying measured values of an agricultural spreading machine (10), having the steps of:
- picking up a measured value representative of a parameter of an agricultural spreading machine (10) by means of a measuring device (20a, 20b) of the agricultural spreading machine (10),
- calculating a calculation value representative of the parameter of the agricultural spreading machine (10) by means of a calculation device (14), wherein, during the calculation of the calculation value representative of the parameter of the agricultural spreading machine (10), a spreading disc (18a, 18b), a spreading disc configuration and/or setting parameters of the agricultural spreading machine (10) are taken into consideration; and
- comparing the measured value representative of the parameter of the agricultural spreading machine (10) and the calculation value representative of the parameter of the agricultural spreading machine (10) using an evaluation device (16), wherein at least one of the following steps is carried out when the deviation between the measured value representative of the parameter of the agricultural spreading machine (10) and the calculation value representative of the parameter of the agricultural spreading machine (10) exceeds a tolerance threshold:
- outputting a warning message to a user of the agricultural spreading machine (10),
- interrupting the spreading operation by the agricultural spreading machine (10).

2. Method according to Claim 1,
**characterized in that** the parameter of the agricultural spreading machine (10) is a spreading parameter related to the flight behaviour of the material to be spread or a setting parameter related to the setting of the agricultural spreading machine (10) .

3. Method according to either of the preceding claims, **characterized in that** the calculation of the calculation value representative of the parameter of the agricultural spreading machine (10) is carried out on the basis of physical relationships.

4. Method according to one of the preceding claims, **characterized in that** the calculation of calculation value representative of the parameter of the agricultural spreading machine (10) is carried out on the basis of a relationship between throwing distance, working width and ejection angle.

5. Method according to one of the preceding claims, **characterized in that** the calculation of the calculation value representative of the parameter of the agricultural spreading machine (10) is carried out on the basis of empirically determined relationships.

6. Method according to one of the preceding claims, **characterized in that**, during the calculation of the calculation value representative of the parameter of the agricultural spreading machine (10), one or more further measured values picked up by means of a measuring device (20a, 20b) of the agricultural spreading machine (10) are taken into consideration.

7. Method according to one of the preceding claims, **characterized in that**, during the calculation of the calculation value representative of the parameter of the agricultural spreading machine (10), one or more measured values picked up by means of a measuring device external to the machine are taken into consideration.

8. Method according to Claim 7,
**characterized in that** the one or more further measured values picked up by means of the measuring device external to the machine relate to the grain diameter, the grain size spectrum and/or the bulk density of the material to be spread.

9. Method according to one of the preceding claims, **characterized in that** the picking up of the measured value representative of the parameter of the agricultural spreading machine (10) is carried out by means of a measuring device (20a, 20b) of the agricultural spreading machine (10) using one of the following steps:
- picking up a throwing-distance measured value representative of the throwing distance of the agricultural spreading machine (10) by means of a throwing-distance measuring device of the agricultural spreading machine (10);
- picking up an ejection-angle measured value representative of the ejection angle of the agricultural spreading machine (10) by means of an ejection-angle measuring device of the agricultural spreading machine (10).

10. Method according to one of the preceding claims, **characterized in that**, during the calculation of the calculation value representative of the parameter of the agricultural spreading machine (10), one or more database values retrieved from a database (52) are taken into consideration.

11. Method according to one of the preceding claims, **characterized in that** the calculation of the calculation value representative of the parameter of the agricultural spreading machine (10) is carried out on the basis of a relationship between the grain size spectrum, bulk density, ejection angle, setting parameters and the spreading disc (18a, 18b) used.

## Revendications

1. Procédé de vérification de valeurs de mesure d'une épandeuse agricole (10), comprenant les étapes consistant à :
- détecter une valeur de mesure représentant un paramètre d'une épandeuse agricole (10), au moyen d'un dispositif de mesure (20a, 20b) de l'épandeuse agricole (10) ,
- calculer une valeur de calcul représentant le paramètre de l'épandeuse agricole (10), au moyen d'un dispositif de calcul (14), dans lequel, pour le calcul de la valeur de calcul représentant le paramètre de l'épandeuse agricole (10), un disque d'épandage (18a, 18b), une configuration de disques d'épandage et/ou des paramètres de réglage de l'épandeuse agricole (10) sont pris en compte ; et
- comparer la valeur de mesure représentant le paramètre de l'épandeuse agricole (10) et la valeur de calcul représentant le paramètre de l'épandeuse agricole (10), par un dispositif d'évaluation (16), au moins l'une des étapes suivantes étant effectuée si l'écart entre la valeur de mesure représentant le paramètre de l'épandeuse agricole (10) et la valeur de calcul représentant le paramètre de l'épandeuse agricole (10) dépasse un seuil de tolérance :
- émettre un avertissement à destination d'un utilisateur de l'épandeuse agricole (10),
- interrompre le processus d'épandage par l'épandeuse agricole (10).

2. Procédé selon la revendication 1, **caractérisé en ce que** le paramètre de l'épandeuse agricole (10) est un paramètre d'épandage concernant le comportement de vol du produit d'épandage ou un paramètre de réglage concernant le réglage de l'épandeuse agricole (10).

3. Procédé selon l'une quelconque des revendications précédentes, **caractérisé en ce que** le calcul de la valeur de calcul représentant le paramètre de l'épandeuse agricole (10) est effectué sur la base de relations physiques.

4. Procédé selon l'une quelconque des revendications précédentes, **caractérisé en ce que** le calcul de la valeur de calcul représentant le paramètre de l'épandeuse agricole (10) est effectué sur la base d'une relation entre la distance de projection, la largeur de travail et l'angle d'éjection.

5. Procédé selon l'une quelconque des revendications précédentes, **caractérisé en ce que** le calcul de la valeur de calcul représentant le paramètre de l'épandeuse agricole (10) est effectué sur la base de relations établies de manière empirique.

6. Procédé selon l'une quelconque des revendications précédentes, **caractérisé en ce que** pour le calcul de la valeur de calcul représentant le paramètre de l'épandeuse agricole (10), une ou plusieurs autres valeurs de mesure, détectées au moyen d'un dispositif de mesure (20a, 20b) de l'épandeuse agricole (10), sont prises en compte.

7. Procédé selon l'une quelconque des revendications précédentes, **caractérisé en ce que** pour le calcul de la valeur de calcul représentant le paramètre de l'épandeuse agricole (10), une ou plusieurs valeurs de mesure, détectées au moyen d'un dispositif de mesure externe à la machine, sont prises en compte.

8. Procédé selon la revendication 7, **caractérisé en ce que** ladite une ou les plusieurs autres valeurs de mesure, détectées au moyen du dispositif de mesure externe à la machine, concernent le diamètre de graine, le spectre de grosseur des graines et/ou la densité en vrac du produit d'épandage.

9. Procédé selon l'une quelconque des revendications précédentes, **caractérisé en ce que** la détection de la valeur de mesure représentant le paramètre de l'épandeuse agricole (10) est effectuée au moyen d'un dispositif de mesure (20a, 20b) de l'épandeuse agricole (10) par l'une des étapes suivantes consistant à :
- détecter une valeur de mesure de distance de projection représentant la distance de projection de l'épandeuse agricole (10), au moyen d'un dispositif de mesure de distance de projection de l'épandeuse agricole (10) ;
- détecter une valeur de mesure d'angle d'éjection représentant l'angle d'éjection de l'épandeuse agricole (10), au moyen d'un dispositif de mesure d'angle d'éjection de l'épandeuse agricole (10).

10. Procédé selon l'une quelconque des revendications précédentes, **caractérisé en ce que** pour le calcul de la valeur de calcul représentant le paramètre de l'épandeuse agricole (10), une ou plusieurs valeurs de base de données, extraites d'une base de données (52), sont prises en compte.

11. Procédé selon l'une quelconque des revendications précédentes, **caractérisé en ce que** le calcul de la valeur de calcul représentant le paramètre de l'épandeuse agricole (10) est effectué sur la base d'une relation entre le spectre de grosseur des graines, la densité de vrac, l'angle d'éjection, des paramètres de réglage et le disque d'épandage (18a, 18b) utilisé.
